# FASCICULE DE BREVET EUROPEEN

(11) **EP 3 244 083 B1**
(45) Date de publication et mention de la délivrance du brevet: **20.02.2019**
(21) Numéro de dépôt: 17179147.8
(22) Date de dépôt: 30.06.2017
(51) Int. Cl.: F16D 41/20, F16D 3/72, F16H 55/36

(54) **POULIE DE DECOUPLAGE A EMBRAYAGE DEPORTE**
ENTKUPPLUNGSRIEMENSCHEIBE MIT AUSRÜCKBARER KUPPLUNG
DECOUPLING PULLEY WITH OFFSET CLUTCH

(30) Priorité: 30.06.2016 FR 1656151
(43) Date de publication de la demande: 15.11.2017
(73) Titulaire: HUTCHINSON, 75008 Paris (FR)
(72) Inventeur: BOURGEAIS, Jean-Marc, 37190 Azay Le Rideau (FR); GUILLOT, Benoît, 37270 Larçay (FR); VARIN, Hervé, 37300 Joue Les Tours (FR)
(74) Mandataire: Gevers & Orès

(56) Documents cités:
- EP-A1- 2 511 557
- EP-A1- 2 937 590
- WO-A1-2009/047816
- WO-A1-2009/054919
- WO-A1-2015/066800
- DE-A1-102007 049 905

## Description

L'invention concerne le domaine des poulies de découplage.

Une telle poulie est par exemple proposée dans le document EP 0 980 479 (D1).

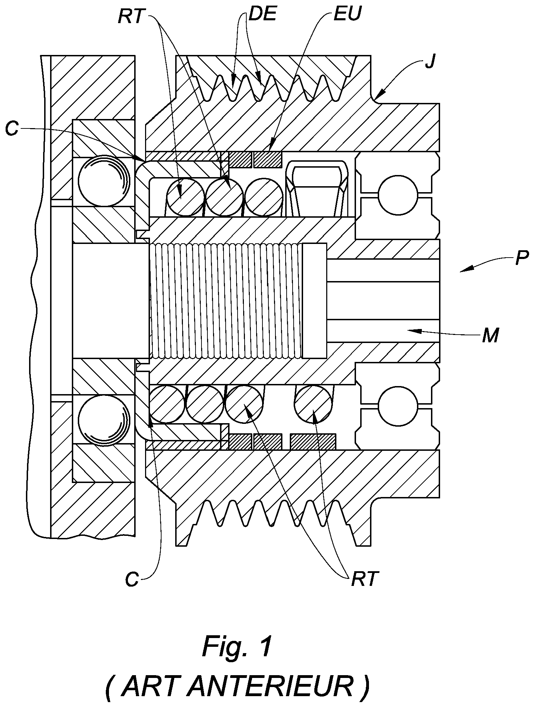

Cette poulie est représentée sur la figure 1, selon une vue en coupe longitudinale.

La poulie P comprend une jante J et un moyeu M qui peuvent être couplés l'un à l'autre par l'intermédiaire d'un ressort de torsion RT et d'un embrayage unidirectionnel EU monté en série avec le ressort de torsion RT.

Le ressort de torsion RT est construit et agencé pour transmettre des mouvements de rotation imprimés à la jante J, par exemple par une courroie montée sur la jante et reliée à un arbre moteur, au moyeu M de sorte que le moyeu M, lequel est par exemple destiné à être monté sur un arbre d'un dispositif auxiliaire tel qu'un alternateur, puisse être entraîné dans le même sens que la jante (mode « couplage »).

L'embrayage unidirectionnel EU est par ailleurs construit et agencé de sorte que le moyeu M et, de là, l'arbre sur lequel ce moyeu est destiné à être monté, puisse tourner à une vitesse supérieure à la vitesse de rotation de la jante J, notamment lorsque la poulie est décélérée, par exemple du fait d'une décélération du moteur (mode « roue libre »).

Ainsi et classiquement, en mode « couplage », le couple moteur passe par la courroie, la jante J, l'embrayage unidirectionnel EU qui est alors entraîné par frottement par rapport à la jante J, le ressort de torsion RT qui est connecté en série avec l'embrayage unidirectionnel EU, le moyeu M sur lequel le ressort de torsion RT est monté et qui vient alors en contact avec un composant C fixé au moyeu M et enfin, l'arbre sur lequel le moyeu est monté.

Au contraire, en mode « roue libre », l'embrayage unidirectionnel EU se désengage de la jante J et le ressort de torsion RT, en série avec l'embrayage unidirectionnel se trouve en position neutre à couple nul.

Un inconvénient de la poulie proposée dans le document D1 réside dans le fait que le ressort de torsion RT peut subir des déformations (expansions radiales) très importantes dans le mode « couplage ». En effet, dans ce mode de fonctionnement, le couple passe par le ressort de torsion RT, sans que l'expansion radiale du ressort de torsion, résultant de l'application du couple, ne soit limitée.

Aussi, il peut arriver que l'expansion radiale du ressort de torsion RT soit telle que ce dernier vienne au contact de l'embrayage unidirectionnel EU. En effet, dans le document D1, l'embrayage unidirectionnel EU, qui est placé sous la zone de réception DE pour la courroie, est directement placé autour du ressort de torsion RT.

Ceci peut rendre le dispositif non opérationnel.

Ce problème est connu et des solutions pour limiter l'expansion radiale du ressort de torsion ont déjà été proposées.

Ainsi, pour ne pas rencontrer ce problème, le document US 7 975 821 B2 (D2) propose de mettre en oeuvre une pièce intermédiaire (référencée 110 sur la figure 2 du document D2) entre le ressort de torsion et l'embrayage unidirectionnel.

La solution proposée dans le document D2 implique cependant, au niveau de la zone de réception de la courroie, un diamètre de poulie plus important que le diamètre de la poulie proposée dans le document D1.

Cela peut poser des difficultés pratiques car le diamètre maximum acceptable de la poulie au niveau de cette zone de réception de courroie, défini par les constructeurs de machine ou de véhicule notamment automobiles, ne permet pas son emploi dans tout type d'application. Cela limite le rapport de démutiplication obtenu entre le vilebrequin du moteur et l'alternateur. Pratiquement, un diamètre effectif de la zone de denture de 50 mm est impossible alors qu'il serait souhaitable. De ce fait, cela limite également les possibilités pour le dimensionnement du ressort formant l'embrayage unidirectionnel.

Or, le couple transmis entre la jante et le moyeu passant également par l'embrayage unidirectionnel, cela réduit d'autant les possibilités de dimensionnement de l'embrayage unidirectionnel.

Le document EP 2 937 590 A1 divulgue une poulie de découplage telle que définie dans l'introduction de la revendication 1. Un objectif de l'invention est de proposer une poulie de découplage mettant en oeuvre un embrayage unidirectionnel et ne présentant pas l'un au moins des inconvénients précités.

A cet effet, l'invention propose une poulie de découplage munie d'un axe longitudinal, ladite poulie comportant :
- une jante comprenant une première zone, destinée à recevoir une courroie reliant la jante à un premier élément de transmission de puissance, et une deuxième zone située dans le prolongement axial, à savoir selon la direction définie par l'axe longitudinal de la poulie, de la première zone ;
- un moyeu destiné à être solidarisé à un deuxième élément de transmission de puissance ;
l'un des éléments de transmission de puissance étant menant et l'autre étant mené ;
- une couronne montée sous la deuxième zone de la jante et autour du moyeu, de sorte que ladite couronne puisse tourner, autour dudit axe longitudinal, par rapport à la jante et/ou le moyeu ;
- un élément élastiquement déformable monté entre le moyeu et la couronne ;
- un embrayage unidirectionnel dont une extrémité est fixée à la couronne et dont la partie restante est montée à la fois sous la deuxième zone de la jante et au-dessus de la couronne ;
la poulie est telle que la première zone de la jante présente un diamètre interne, la deuxième zone de la jante présente un diamètre interne, le diamètre interne de la deuxième zone étant plus grand que le diamètre interne de la première zone.

Le dispositif pourra également présenter l'une au moins des caractéristiques suivantes, prise seule ou en combinaison :
- la poulie prévoit un capot monté fixement sur la jante et au contact de la couronne ;
- l'embrayage unidirectionnel est un ressort, par exemple un ressort hélicoïdal à spires jointives ;
- l'extrémité de l'embrayage unidirectionnel est logée dans une fente de la couronne, ladite poulie comportant en outre un coin situé dans la fente et à côté de ladite extrémité de l'embrayage unidirectionnel ;
- l'élément élastiquement déformable est un ressort de torsion centré sur le moyeu ;
- l'extrémité de l'embrayage unidirectionnel est agencée au contact d'une extrémité du ressort de torsion ;
- la poulie est telle que l'extrémité du ressort de torsion qui est au contact de l'embrayage unidirectionnel est recourbée, par rapport au reste, définissant une forme générale cylindrique, dudit ressort de torsion et l'extrémité de l'embrayage unidirectionnel est au contact d'une face latérale de cette extrémité recourbée du ressort de torsion ;
- la poulie est telle que l'extrémité du ressort de torsion qui est au contact de l'embrayage unidirectionnel est non recourbée par rapport au reste, définissant une forme générale cylindrique, dudit ressort de torsion et l'extrémité de l'embrayage unidirectionnel est mise bout à bout avec cette extrémité non recourbée du ressort de torsion ;
- la poulie est telle que le moyeu comprend au moins un ergot et la couronne comprend au moins une lumière recevant ledit au moins un ergot de moyeu, de sorte que, dans un sens de rotation relatif entre la jante et le moyeu, le ressort de torsion s'engage sur le moyeu jusqu'à ce que ledit au moins un ergot de moyeu vienne en butée contre une extrémité de ladite au moins une lumière de couronne ;
- la poulie comporte au moins un palier situé entre la jante et le moyeu ;
- ledit au moins un palier comporte au moins une face s'étendant radialement et en contact avec le moyeu ;
- ledit au moins un palier est réalisé soit en un matériau plastique choisi parmi le polyétheréthercétone (PEEK), le polytéréphtalate d'éthylène (PET), le polyamide (PA) chargé en bisulfure de molybdène (MoS₂) ou le polyamide (PA) chargé en polytétrafluoroéthylène (PTFE) soit avec une couche interne métallique ou en alliage métallique, recouverte par une couche externe chargée de polytétrafluoroéthylène (PTFE) ;
- l'élément élastiquement déformable est un corps réalisé en élastomère ou en thermoplastique élastomère ;
- la poulie prévoit au moins un roulement agencé entre le moyeu et la jante, avantageusement sous la première zone de la jante.

L'invention sera mieux comprise et d'autres buts, avantages et caractéristiques de celle-ci apparaîtront plus clairement à la lecture de la description qui suit et qui est faite au regard des figures annexées suivantes :
- La figure 2 représente un premier mode de réalisation de l'invention, selon une vue en coupe longitudinale ;
- La figure 3 est une vue éclatée de la poulie représentée sur la figure 2 ;
- La figure 4 est une vue en perspective et en coupe de la poulie représentée sur la figure 2 ;
- La figure 5 est une autre vue en perspective de la poulie de la figure 2, selon une coupe différente de celle qui est représentée sur la figure 4 ;
- La figure 6 est une autre vue en perspective de la poulie de la figure 2 sans la couronne ; La figure 7 est une vue en coupe de la poulie de la figure 2 représentée de manière analogue à la représentation de la figure 4, mais dans un autre mode de fonctionnement ;
- La figure 8 est un graphique représentant l'évolution du couple transmis entre l'élément menant (jante, par exemple) et l'élément mené (moyeu, selon cet exemple) en fonction d'une évolution angulaire entre ces mêmes éléments ;
- La figure 9 représente un deuxième mode de réalisation d'une poulie conforme à l'invention, selon une coupe longitudinale et en perspective ;
- La figure 10 est une vue éclatée de la poulie représentée sur la figure 9 ;
- La figure 11 représente un troisième mode de réalisation d'une poulie conforme à l'invention, selon une coupe longitudinale et en perspective ;
- La figure 12 est une vue éclatée de la poulie représentée sur la figure 11 ;
- La figure 13 représente un quatrième mode de réalisation d'une poulie conforme à l'invention, selon une coupe longitudinale et en perspective, sans couronne ;
- La figure 14 est une vue éclatée de la poulie représentée sur la figure 13 ;
- La figure 15 est une vue de face en coupe de la poulie selon le premier mode de réalisation de la poulie conforme à l'invention ;
- La figure 16 représente un embrayage unidirectionnel de la poulie et un coin susceptible d'être utilisé conjointement avec l'embrayage unidirectionnel ;
- La figure 17 représente un cinquième mode de réalisation d'un poulie conforme à l'invention, dans lequel la couronne coopère avec une contre-couronne, selon une vue en coupe longitudinale ;
- La figure 18 représente, selon une vue de face, la couronne de la figure 17 ;
- La figure 19 représente, selon une vue de perspective arrière, la contre-couronne de la figure 17, destinée à coopérer avec la couronne de la figure 18 ;
- La figure 20 représente, selon une vue de côté, un embrayage unidirectionnel susceptible d'être employé dans le cadre de l'invention ;
- La figure 21 représente, selon une vue de côté, un autre embrayage unidirectionnel susceptible d'être employé dans le cadre de la l'invention ;
- La figure 22 représente, selon une vue de côté, encore un autre embrayage unidirectionnel susceptible d'être employé dans le cadre de l'invention ;
- La figure 23 est une vue éclatée d'une couronne et d'une contre-couronne selon le cinquième mode de réalisation d'une poulie conforme à l'invention représentée sur la figure 17, avec un embrayage unidirectionnel selon la figure 22 ; et
- La figure 24 est une vue en perspective inversée par rapport à celle de la figure 23.

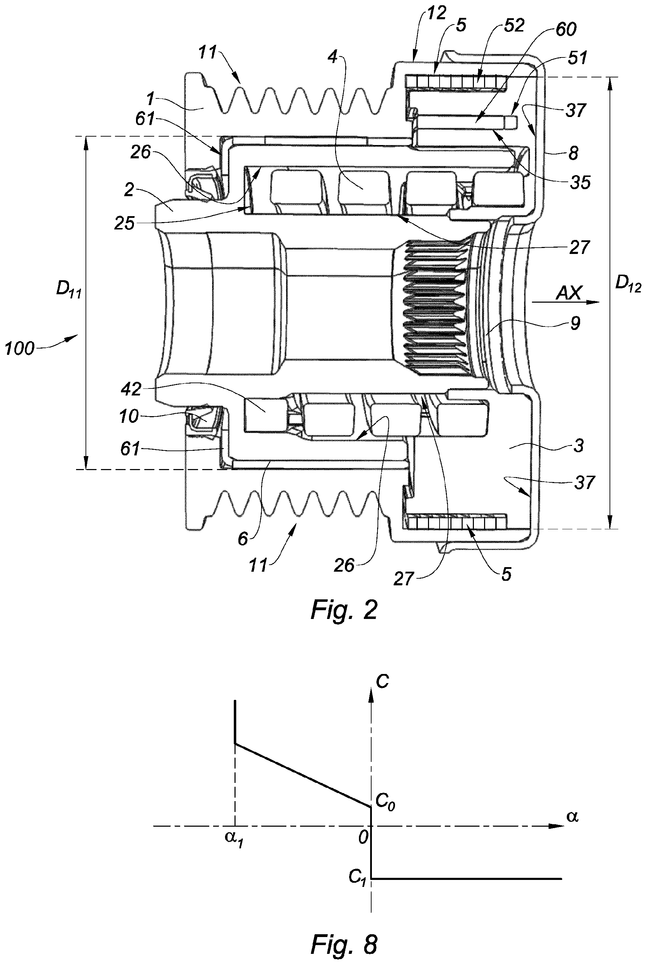

Un premier mode de réalisation d'une poulie 100 conforme à l'invention est représenté selon différentes vues sur les figures 2 à 7.

La poulie 100 de découplage selon l'invention comporte une jante 1 destinée à être solidaire d'un premier élément de transmission de puissance (non représenté, par exemple une courroie reliée à un arbre d'un moteur de véhicule, qui serait en l'occurrence menant). La jante 1 est munie d'une première zone 11 de réception destinée à recevoir une courroie, en l'occurrence une courroie de type poly V®, permettant de faire le lien entre la jante 1 et le premier élément de transmission de puissance. La jante 1 est également munie d'une deuxième zone 12 située dans le prolongement axial, à savoir selon la direction définie par l'axe longitudinal AX de la poulie 100, de la première zone 11.

Avantageusement, la deuxième zone 12 de la jante 1 présente un diamètre interne D₁₂ plus grand que le diamètre interne D₁₁ de la première zone 11 de cette jante 1.

La poulie 100 comporte également un moyeu 2 destiné à être solidaire d'un deuxième élément de transmission de puissance (par exemple un arbre d'un alternateur, qui serait en l'occurrence mené) et comportant, dans ce premier mode de réalisation, au moins un ergot 21, 22, 23, s'étendant avantageusement axialement (axe longitudinal AX sur la figure 2).

L'un des éléments de transmission de puissance est menant et l'autre est mené.

La poulie 100 comporte aussi une couronne 3 montée sous la deuxième zone 12 de la jante 1 et autour du moyeu 2. De plus, la couronne 3 est montée, au sein de la poulie 100, de sorte qu'elle puisse tourner autour de l'axe longitudinal AX, par rapport à la jante 1 et/ou par rapport au moyeu 2. Ce mouvement de rotation sera expliqué de façon plus détaillée dans la suite de la description. Dans ce premier mode de réalisation, la couronne 3 comporte par ailleurs au moins une lumière 31, 32, 33 recevant ledit au moins un ergot 21, 22, 23 de moyeu 2. La ou chaque lumière 31, 32, 33 comporte deux extrémités 310, 311 ; 320, 321 ; 330, 331 aptes à servir de butée pour l'ergot correspondant 21, 22, 23 du moyeu 2, selon le mode de fonctionnement de la poulie 100.

La poulie 100 est également munie d'un élément 4 élastiquement déformable, en l'occurrence dans ce premier mode de réalisation, d'un ressort 4 de torsion.

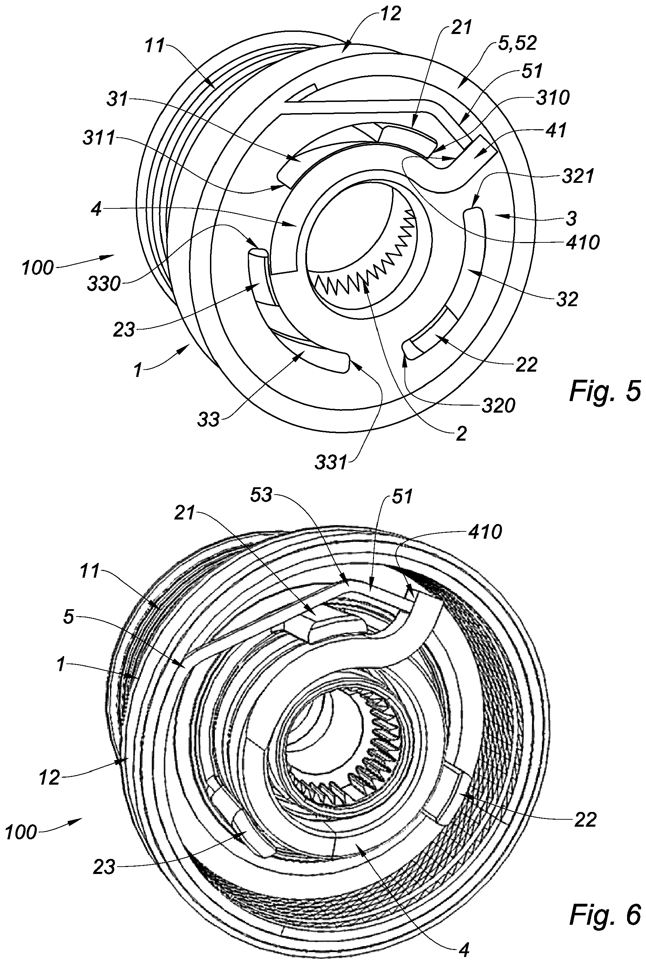

Ce ressort 4 de torsion est monté entre le moyeu 2 et la couronne 3. Plus précisément, le ressort 4 de torsion est centré sur le moyeu 2, ce dernier prévoyant avantageusement une gorge périphérique 25 pour recevoir le ressort 4 de torsion. Pour assurer son montage entre le moyeu 2 et la couronne 3, le ressort 4 de torsion est avantageusement fixé à la fois au moyeu 2 et à la couronne 3. La fixation du ressort 4 de torsion au moyeu 2 et à la couronne 3 peut s'effectuer par un encastrement ou par des formes de retenue, prévues dans le moyeu 2 et dans la couronne 3. Par exemple, et comme illustré sur les figures annexées, on peut observer que l'extrémité 41 du ressort 4 de torsion est encastrée dans la couronne 3 (fig. 5) et que l'autre extrémité 42 du ressort 4 de torsion est encastrée dans le moyeu 2 (fig. 2).

La poulie 100 comporte aussi un embrayage unidirectionnel 5, se présentant en l'occurrence et par exemple sous la forme d'un ressort hélicoïdal à spires jointives.

Cet embrayage unidirectionnel 5 est monté à l'intérieur de la jante 1. Plus précisément, l'embrayage unidirectionnel 5 comprend une extrémité 51 fixée à la couronne 3, par exemple par insertion voire encastrement dans une ouverture ou fente 35 réalisée dans la couronne 3. La partie restante 52 de l'embrayage unidirectionnel 5 est quant à elle montée à la fois sous la deuxième zone 12 de la jante 1 et au-dessus de la couronne 3. On note que cette partie 52 présente la forme générale d'un cylindre.

Avantageusement, l'autre extrémité (non visible sur les figures annexées) de l'embrayage unidirectionnel 5 est laissée libre et n'est donc fixée ni à la couronne 3, ni à la jante 1. Dans ce cas, l'embrayage unidirectionnel 5 est choisi pour qu'à l'état naturel, le diamètre de cet embrayage unidirectionnel 5 soit plus grand que celui de la jante 1, ce qui permet d'assurer une précontrainte de l'embrayage unidirectionnel 5 quand il est inséré dans l'alésage interne de la deuxième zone 12 de la jante 1.

L'extrémité 51 de l'embrayage unidirectionnel 5 se présente avantageusement, et comme représenté sur les figures 1 à 7 annexées, par un bras. Cette extrémité ou bras 51 est avantageusement au contact de l'extrémité 41 du ressort 4 de torsion, pour apporter une meilleure transmission de couple. Plus précisément, l'extrémité 41 du ressort de torsion 4 qui est au contact de l'embrayage unidirectionnel 5 est recourbée par rapport au reste du ressort de torsion, ledit reste définissant une forme générale cylindrique. De ce fait, l'extrémité 51 de l'embrayage unidirectionnel est au contact d'une face latérale 410 de l'extrémité recourbée 41 du ressort de torsion 4. Cette conception est facilitée par la présence d'un cintrage 53 du bras 51. En pratique, l'extrémité recourbée peut s'étendre sensiblement radialement. Cette conception particulière facilite, en mode « couplage, le travail en fermeture du ressort 4 de torsion contre la paroi 27 du moyeu 2.

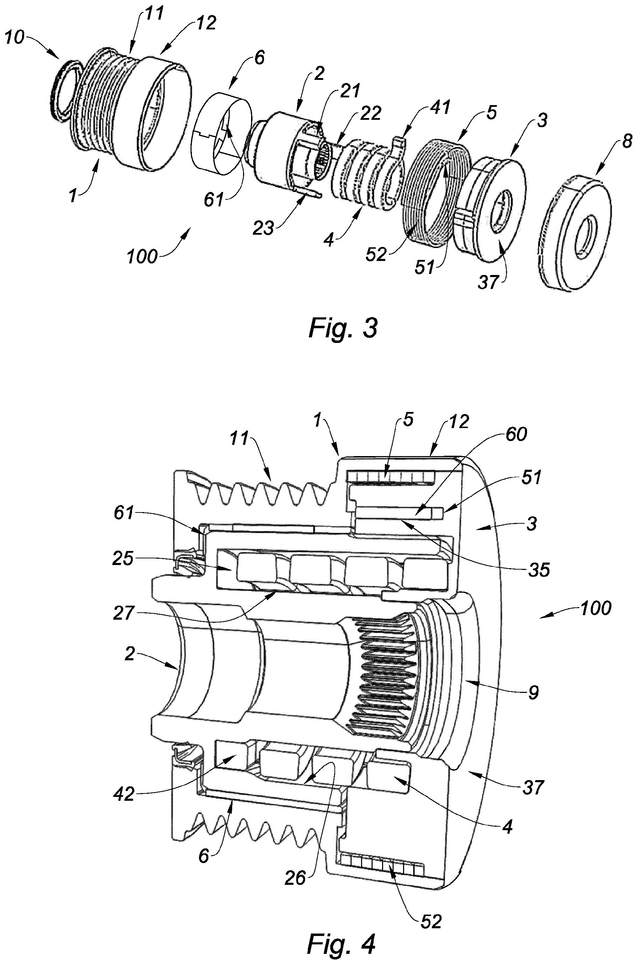

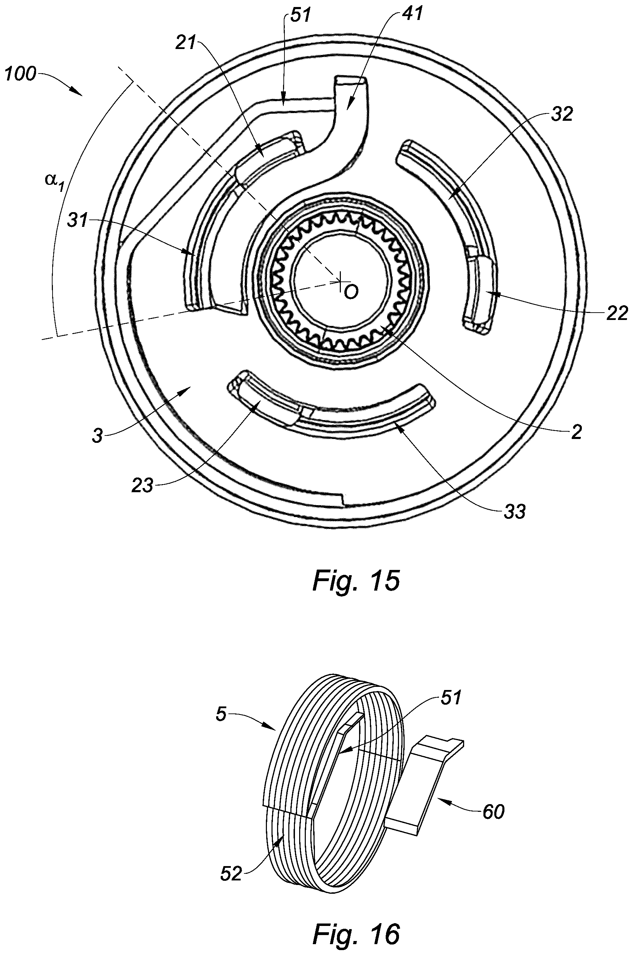

Il convient de noter qu'avantageusement, on peut prévoir un coin 60 situé dans la fente 35 de la couronne 3 et à côté de l'extrémité ou bras 51 de l'embrayage unidirectionnel 5. Ce coin 60 facilite le maintien du bras 51 en place lors de la transmission de couple. Un tel coin 60 est notamment visible sur les figures 2 et 4 ainsi que sur la figure 16, selon une vue éclatée partielle, représentant l'embrayage unidirectionnel 5 et le coin 60 (celui-ci n'ayant pas été représenté sur la figure 3). Le coin 60 permet de mieux maintenir le bras 51 dans la fente 35 prévue dans la couronne 3 pour recevoir ce bras 51. En particulier, il permet d'éviter le flambage du bras 51 lors du passage de couple.

On comprend que l'embrayage unidirectionnel 5 est monté en série avec le ressort 4 de torsion, par l'intermédiaire de la couronne 3 qui les maintient en contact.

De manière avantageuse, et comme illustré sur les figures 1 à 7 annexées, notamment les figures 2, 3 et 4, la poulie comporte au moins un palier 6, se présentant par exemple sous la forme d'un anneau cylindrique, interposé entre le moyeu 2 et la jante 1. Le palier 6 sert alors de guide au moyeu 2 et remplace un ou plusieurs roulements, particulièrement encombrants dans le cas d'une mise en oeuvre d'un ressort 4 de torsion. Ledit au moins un palier 6 comporte avantageusement une face 61 s'étendant radialement et en contact avec le moyeu 2. Cette face 61 facilite le montage et la tenue en place du palier 6. Par ailleurs, le palier 6 peut être réalisé en un matériau plastique choisi parmi le polyétheréthercétone (PEEK), le polytéréphtalate d'éthylène (PET), le polyamide (PA) chargé en bisulfure de molybdène (MoS₂) ou le polyamide (PA) chargé en polytétrafluoroéthylène (PTFE). En variante, le palier 6 peut être réalisé avec une couche interne métallique ou en alliage métallique, recouverte par une couche externe chargée de polytétrafluoroéthylène (PTFE).

La poulie 100 comprend enfin un capot 8 auquel est associé un bouchon d'étanchéité 9. Le capot 8 est destiné à recouvrir la jante 1, au niveau de la deuxième zone 12 de de la jante 1, et est fixé à cette jante 1. Avantageusement et comme représenté sur les figures 2 à 7 annexées, le capot 8 est monté au contact de la couronne 3, et plus précisément au contact de la face latérale 37 de la couronne 3, qui fait face au capot 8. La poulie 100 comprend enfin un joint d'étanchéité 10 venant dans une ouverture latérale de la jante 1, du côté opposé au capot 8.

Nous allons maintenant décrire le fonctionnement de la poulie 100 selon ce premier mode de réalisation de l'invention.

Au repos, c'est-à-dire lorsque l'élément élastiquement déformable 4, par exemple un ressort de torsion, n'est pas sollicité, la poulie 100 se présente dans la configuration représentée sur la figure 5.

Si la poulie 100, et plus spécialement la jante 1, est entraînée en rotation par une courroie par exemple reliée à un moteur (cas typique : phase d'accélération du moteur), la jante 1 va alors tourner, par convention, dans le sens horaire.

La mise en rotation de la jante 1 provoque l'expansion radiale de l'embrayage unidirectionnel 5 qui vient alors exercer un effort radial contre l'alésage interne de la jante 1. La jante 1 entraîne alors, par frottement, l'embrayage unidirectionnel 5 en rotation. L'embrayage unidirectionnel 5 étant par ailleurs connecté à la couronne 3, cette dernière va également être entraînée en rotation. Dans la mesure où l'embrayage unidirectionnel 5 est monté en série avec le ressort 4 de torsion par l'intermédiaire de la couronne 3, le ressort 4 de torsion va également se refermer et ainsi provoquer l'entraînement du moyeu 2 dans le sens de rotation de la jante 1.

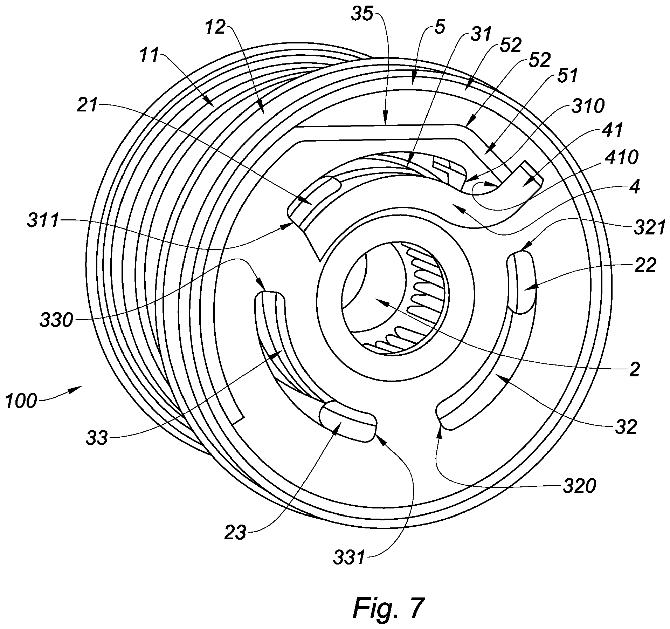

Lors de la fermeture du ressort 4 de torsion sur le moyeu 2 et plus précisément sur la paroi 27 du moyeu 2, la position relative entre la couronne 3 (ou la jante 1, cela revient au même) et le moyeu 2 évolue depuis la position représentée sur la figure 5 vers la position représentée sur la figure 7. En d'autres termes, la ou chaque lumière 31, 32, 33 de la couronne 3 se déplace alors par rapport à le ou chaque ergot correspondant 21, 22, 23 du moyeu 2. En pratique, la position relative entre la couronne 3 et le moyeu 2 dépend de la valeur du couple transmis. Ainsi, la ou chaque lumière 31, 32, 33 peut se déplacer, par rapport à l'ergot correspondant 21, 22, 23 sur un angle inférieur à l'angle maximal alpha 1 (α1) défini entre les deux extrémités 310, 311, 320, 321, 330, 331 opposées de la lumière 31, 32, 33 correspondante (à la largeur de l'ergot près). La ou chaque lumière 31, 32, 33 peut aussi se déplacer jusqu'à une mise en butée entre les ergots 21, 22, 23 et l'extrémité opposée 311, 321, 331 de la ou chaque lumière 31, 32, 33, c'est-à-dire jusqu'à cet angle maximal alpha 1 (α1), comme cela est effectivement représenté sur la figure 7. Cette mise en butée, obtenue par la présence de la ou chaque butée 21, 22, 23 de moyeu 2 et les lumières 31, 32, 33 correspondantes de la couronne 3 limite la déformation radiale du ressort 4 de torsion. En effet, lorsque cette mise en butée est atteinte, le surcroit de couple passe de la couronne 3 vers le moyeu 2 par la ou chaque butée. Cette conception permet, notamment pour des applications où les couples à transmettre sont particulièrement importants, d'améliorer la durée de vie du ressort 4 de torsion et donc de la poulie 100.

On notera que l'angle alpha 1 est représenté sur la figure 15, laquelle est une vue de face de la poulie 100 selon le premier mode de réalisation, dans la position correspondante à celle de la figure 5.

La figure 8 représente le couple transmis entre la jante 1 et le moyeu 2 de la poulie 100 en fonction d'une évolution angulaire entre ces mêmes éléments. La référence (angle nul) correspond à la position de repos de la poulie (fig. 5).

Sur cette figure 8 (pas à l'échelle), le fonctionnement décrit correspond aux angles négatifs ou nul. Le couple initial (angle nul) présente une valeur C₀ (non nulle) qui est liée à la présence du palier 6 qui apporte un léger frottement contre le moyeu 2. Puis, on a une montée du couple, selon une droite, qui traduit l'engagement du ressort 4 de torsion avec le moyeu 2. Et si la ou chaque butée 21, 22, 23 arrive contre l'extrémité opposée 311, 321, 331 de la lumière 31, 32, 33 correspondante (figure 7), le surcroit de couple transmis entre la jante 1 et le moyeu 2 passe par la couronne 3, à l'angle défini par la valeur alpha 1 (α₁).

Tout ce qui précède sur le fonctionnement de la poulie 100 selon le premier mode de réalisation de l'invention concerne le mode « couplage ».

Si la jante 1 décélère (par exemple si le moteur l'entraînant décélère), alors cela provoque la contraction radiale de l'embrayage unidirectionnel 5, ce qui stoppe tout passage de couple entre la jante 1 et l'embrayage unidirectionnel 5 et donc vers le moyeu 2. Le moyeu 2 est alors en survitesse par rapport à la jante 1, mais également par rapport à la couronne 3, ce qui provoque l'expansion radiale du ressort 4 de torsion qui retourne vers sa position d'équilibre (figure 5 ; absence de sollicitation) et, dans le même temps, le ou chaque ergot 21, 22, 23 de moyeu 2 retourne en direction de sa position de la figure 5.

Une fois la position de la figure 5 atteinte, on se retrouve alors à l'angle de valeur nulle (figure 7). Le couple est alors à la valeur Co, pour les raisons expliquées précédemment.

Cependant, si la survitesse du moyeu 2 est suffisamment importante, le moyeu 2 va alors entraîner la couronne 3 en survitesse par rapport à la jante 1 et donc également par rapport au capot 8 qui est monté fixe sur la jante 1 et au contact de la face 37 de la couronne 3. L'effort de contact entre la couronne 3 et la capot 8 est généré par une précontrainte axiale du ressort 4. Cette précontrainte peut être modulable en fonction du niveau C₁ souhaité. Ce contact implique alors entre le capot 8 et la couronne 3 un frottement qui fait passer le couple de la valeur C₀ à la valeur C₁ (|C1 |> C0, du fait que le frottement capot/couronne s'ajoute au frottement moyeu/palier). Il convient de noter que l'entraînement s'effectue alors par la liaison entre le ou chaque ergot 21, 22, 23 et l'extrémité 310, 320, 330 de la lumière 31, 32, 33 correspondante, sans passer par le ressort 4 de torsion. Le frottement entre le capot 8 et la couronne 3 permet alors de décélérer plus rapidement le moyeu 2. Ceci est particulièrement intéressant car la survitesse du moyeu 2 par rapport à la jante 1 génère des phénomènes de bruyance que l'on peut ainsi limiter.

Tout ce qui précède dans le cas d'une décélération de la jante1 concerne donc le mode « roue libre ».

Compte tenu de ce qui précède, il convient de noter que le frottement entre le capot 8 et la couronne 3 n'intervient que dans le mode « roue libre ». En effet, dans le mode « couplage », la couronne 3 est entraînée par la jante 1, si bien qu'il n'y a pas de vitesse relative entre le capot 8 et la couronne 3. Ce frottement est donc mis à profit lorsqu'il est utile, à savoir en mode « roue libre » pour améliorer la décélération du moyeu 2, la survitesse du moyeu 2 générant des phénomènes de bruyance qu'on cherche à limiter. Par ailleurs, en mode « couplage », l'absence de déplacement relatif entre le capot 8 et la couronne 3 évite des pertes mécaniques par frottement.

En revanche, le frottement entre le moyeu 2 et le palier 6 advient quel que soit le mode de fonctionnement de la poulie, mode « couplage » ou mode « roue libre ».

On notera toutefois que, dans le cadre de l'invention, le fait que la face latérale 37 de la couronne 3 soit au contact du capot 8 n'est pas obligatoire.

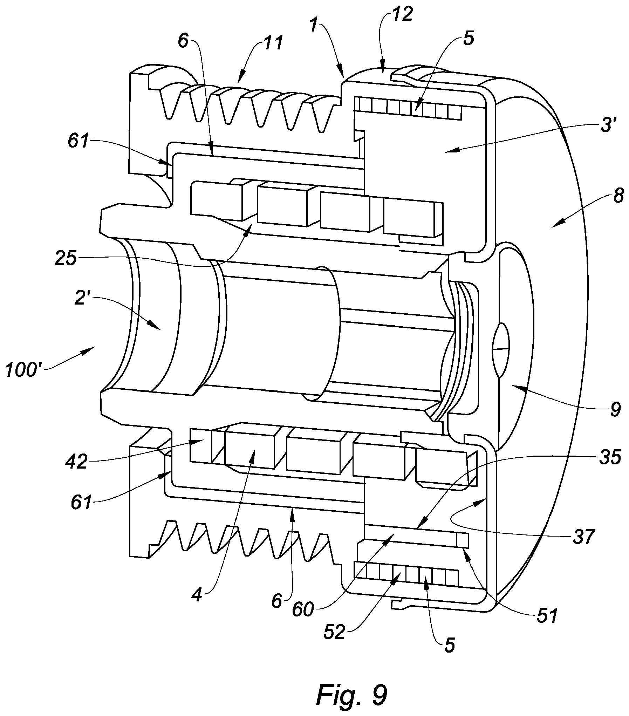

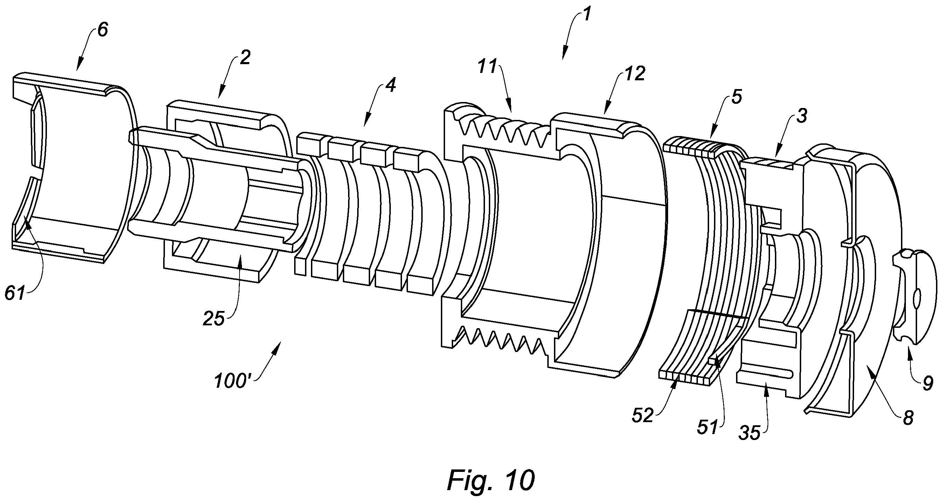

Nous allons maintenant décrire une poulie 100' selon un deuxième mode de réalisation conforme à l'invention, à l'appui des figures 9 et 10 (le joint d'étanchéité 10 n'est pas représenté sur ces figures, mais présent ; de même sur la figure 10 seulement le coin 60 n'est pas représenté mais est présent sur la figure 9, ce coin 60 se présentant, lorsqu'il est avantageusement prévu comme représenté sur la figure 16).

Dans ce deuxième mode de réalisation, des références identiques se réfèrent à des éléments identiques à ceux du premier mode de réalisation.

Le deuxième mode de réalisation se distingue du premier mode de réalisation par la conception du moyeu et de la couronne.

En effet, dans ce deuxième mode de réalisation, la poulie 100' comporte un moyeu 2' qui ne nécessite pas d'ergots et en conséquence d'une couronne 3' qui ne nécessite par de lumières correspondantes. Les figures 9 et 10 présentent en effet un moyeu 2' sans ergots et une couronne 3 sans lumière.

En conséquence, dans ce deuxième mode de réalisation, il n'est pas prévu de mise en butée à un angle maximal, nommé alpha 1 pour le premier mode de réalisation, pour assurer un passage de couple, en mode « couplage », directement entre la couronne 3' et le moyeu 2' sans passer par le ressort 4 de torsion.

En effet, une telle mise en butée n'est pas obligatoire pour certaines applications dans lesquelles le couple transmis entre la jante 1 et le moyeu 2' est limité.

Dans ce deuxième mode réalisation, en mode « roue libre », le couple de frottement entre le capot 8 et l'anneau 3 passe directement sur le ressort 4 de torsion. Cela se traduit par une mise en ouverture du ressort.

Pour le reste, la conception de la poulie 100' est identique à celle de la poulie 100 du premier mode de réalisation. C'est en particulier le cas de l'embrayage unidirectionnel 5 et le cas échéant du coin 60 représenté sur la figure 16. C'est aussi le cas de la conception avantageuse mais non obligatoire de la mise au contact de la couronne 3' contre le capot 8 et le choix des différents matériaux, par exemple pour le palier 6. En conséquence, le schéma fonctionnel de la poulie 100' correspond à celui de la figure 8, à l'exception de la montée de couple (droite verticale) à l'angle alpha 1, qui n'existe plus dans ce deuxième mode de réalisation.

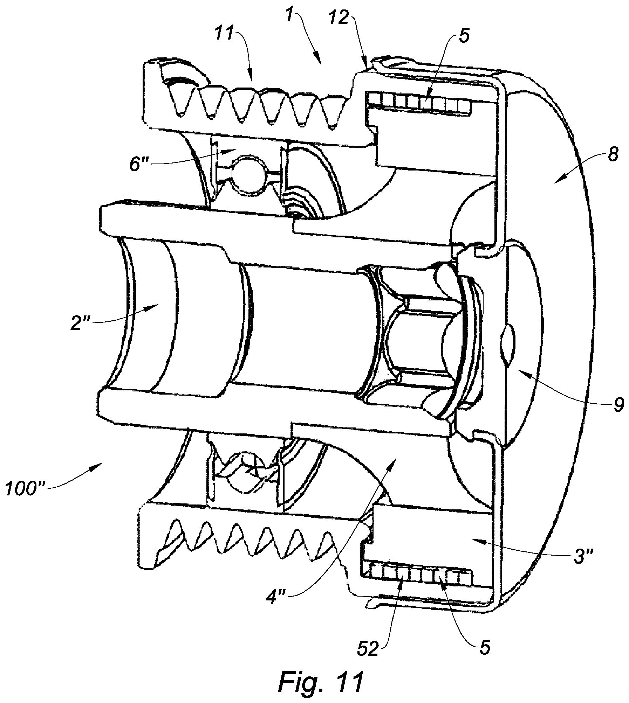

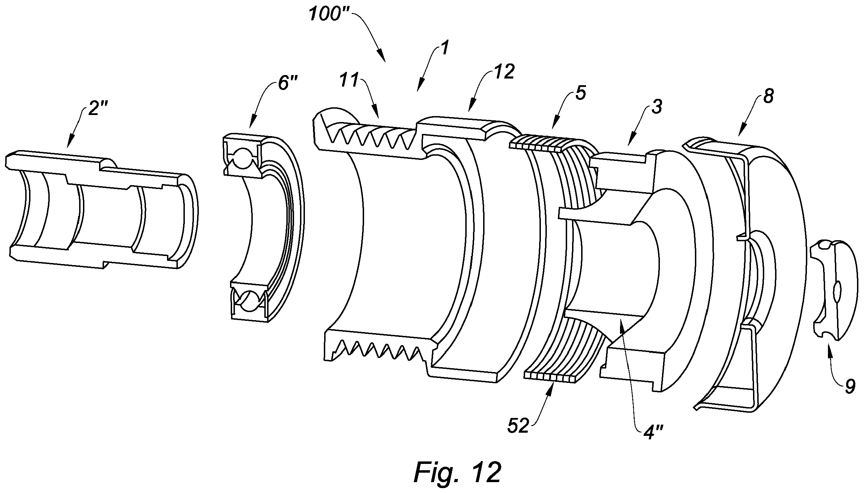

Nous allons maintenant décrire un troisième mode de réalisation, à l'appui des figures 11 et 12, d'une poulie 100" conforme à l'invention (le joint d'étanchéité 10 n'est pas représenté sur ces figures, mais présent).

Dans ce troisième mode de réalisation, l'élément élastiquement déformable n'est plus un ressort 4 de torsion.

En effet, le ressort de torsion est remplacé par un corps 4" en élastomère ou en thermoplastique élastomère.

Du fait de cette conception, le moyeu 2" présente une forme adaptée pour recevoir ce corps 4" en élastomère ou en thermoplastique élastomère, par collage ou surmoulage. Par ailleurs, ce corps 4" en élastomère ou en thermoplastique élastomère peut être fixé à la couronne 3" par collage ou surmoulage. L'embrayage unidirectionnel 5 peut être le même que celui du premier mode de réalisation comme du deuxième mode de réalisation, notamment par l'existence d'une extrémité, par exemple en forme de bras 51, venant se fixer dans la couronne 3 et avantageusement un coin 60 tel que décrit sur la figure 16 (le bras 51 et le coin 60 ne sont pas visibles sur les figures 11 et 12, du fait du plan de coupe choisi pour ces figures). Dans ce cas toutefois, l'extrémité du bras n'a pas à être en contact avec le corps 4" en élastomère ou en thermoplastique élastomère et il est donc simplement logé dans la couronne 3. Il est par ailleurs prévu un roulement 6" monté entre le moyeu 2" et la jante 1 pour assurer le guidage en rotation du moyeu 2". Le roulement 6" est alors avantageusement disposé sous la première zone 11 de la jante 1, du fait de la place laissée libre par l'absence de ressort de torsion 4. La présence d'un palier 6 n'est plus nécessaire du fait de la présence du roulement 6". On notera également que, de manière analogue au deuxième mode de réalisation, le moyeu 2" ne comporte pas d'ergots et la couronne 3" ne comporte pas, en conséquence, de lumières pour recevoir de tels ergots.

Sur le plan fonctionnel, le troisième mode de réalisation n'implique pas d'angle de débattement maximal α1 en mode « couplage ». La valeur du couple C₀ n'est plus liée au léger frottement palier/moyeu, mais au frottement résiduel au sein du roulement 6". Pour le reste, la poulie 100" fonctionne de manière identique à la poulie 100. En particulier, le corps 4" travaille, c'est-à-dire se déforme élastiquement, dans la zone d'angle négatif de la figure 8 et n'est pas sollicité dans les zones d'angles positifs. Par ailleurs, le couple C₁-C₀ correspond à l'apport du frottement entre le capot 8 et la couronne 3, lorsque la face latérale 37 de cette dernière est montée au contact du capot 8.

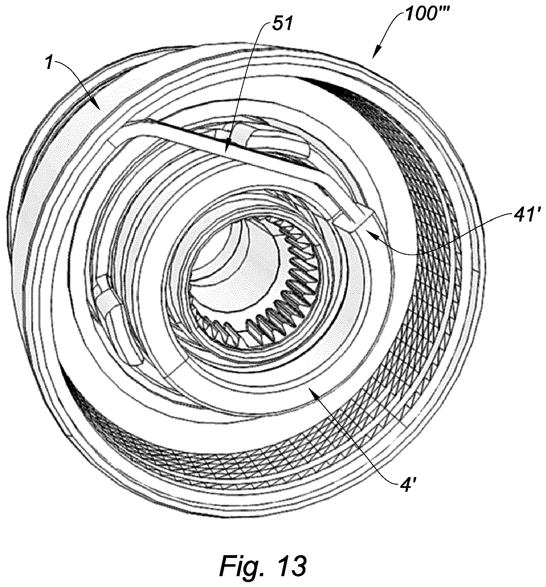

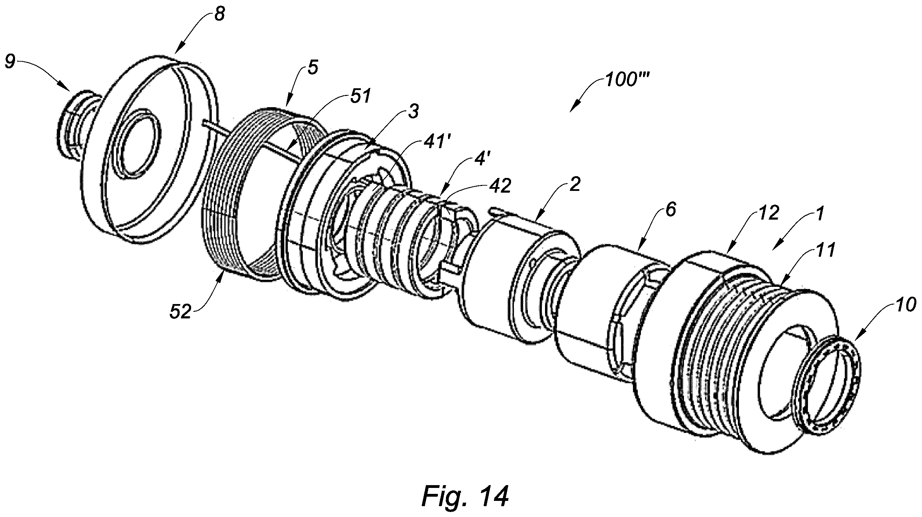

Nous allons maintenant décrire un quatrième mode de réalisation d'une poulie conforme à l'invention, à l'appui des figures 13 et 14.

Sur ces figures, le quatrième mode de réalisation est représenté en tant que variante du premier mode de réalisation.

Dans ce quatrième mode de réalisation, le ressort de torsion ne travaille plus en fermeture dans le mode « couplage », mais en ouverture.

Dans ce cas, le moyeu 2 présente la gorge périphérique 25, de sorte que lorsque le ressort de torsion 4' travaille en ouverture, il puisse venir contre la paroi interne 26 de la gorge périphérique 25 qui est la plus externe radialement au sein de la gorge périphérique 25 et appartenant au moyeu 2.

Dans ce cas, cela se traduit également par l'absence d'extrémité 41 recourbée par rapport au reste du ressort de torsion. Le ressort de torsion 4' présente donc ici une forme générale cylindrique. Dit autrement, l'extrémité 41' du ressort 4' de torsion qui est au contact de l'embrayage unidirectionnel 5 est non recourbée par rapport au reste, définissant une forme générale cylindrique, dudit ressort 4' de torsion. Le contact entre l'extrémité du bras 51 de l'embrayage unidirectionnel et l'extrémité 41' du ressort de torsion 4' ne se fait donc plus en mettant l'extrémité du bras 51 contre une face latérale 410 de l'extrémité 41 du ressort de torsion 4 comme cela est illustré sur la figure 5 (premier mode de réalisation), mais par mise bout à bout de l'extrémité 51 de l'embrayage unidirectionnel avec cette extrémité non recourbée 41' du ressort 4' de torsion. Cette conception facilite, en mode « couplage », l'ouverture du ressort 4' de torsion contre la paroi 26 du moyeu 2. Du fait de cette conception, le ressort de torsion 4' est simplifié dans sa réalisation. L'embrayage unidirectionnel 5 peut donc être le même que celui du premier mode de réalisation et un coin 60 peut alors être envisagé dans les même conditions d'implantation.

Plus généralement, tout le reste est identique.

Il convient de noter que ce quatrième mode de réalisation est également applicable en tant que variante au deuxième mode de réalisation.

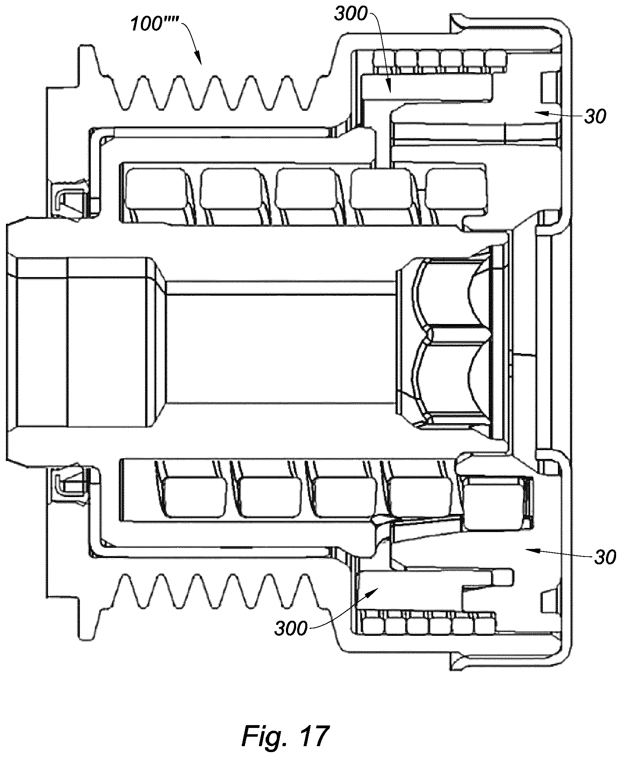

On a représenté, sur la figure 17, une vue en coupe longitudinal d'un cinquième mode de réalisation de l'invention. Cette figure 17 reprend la figure 4 par exemple avec un contre-couronne 300 coopérant avec la couronne 30.

La contre-couronne 300 remplit la même fonction que le coin 60. La contre-couronne 300 remplace donc le coin 60. Tout le reste est identique par rapport à l'illustration de la figure 4 et n'est donc pas référencé sur la figure 17.

Cette contre-couronne 300 présente cependant, pour certaines applications, des avantages par rapport à l'utilisation du coin 60. En effet, le montage de l'extrémité 51 de l'embrayage unidirectionnel est plus aisé avec l'utilisation d'une contre-couronne 300. Par ailleurs, son utilisation limite la déformation de la couronne 30 lors du montage de l'extrémité 51 de l'embrayage unidirectionnel dans la couronne 30 car, contrairement au coin 60, il n'y a pas besoin de rentrer à force dans la couronne.

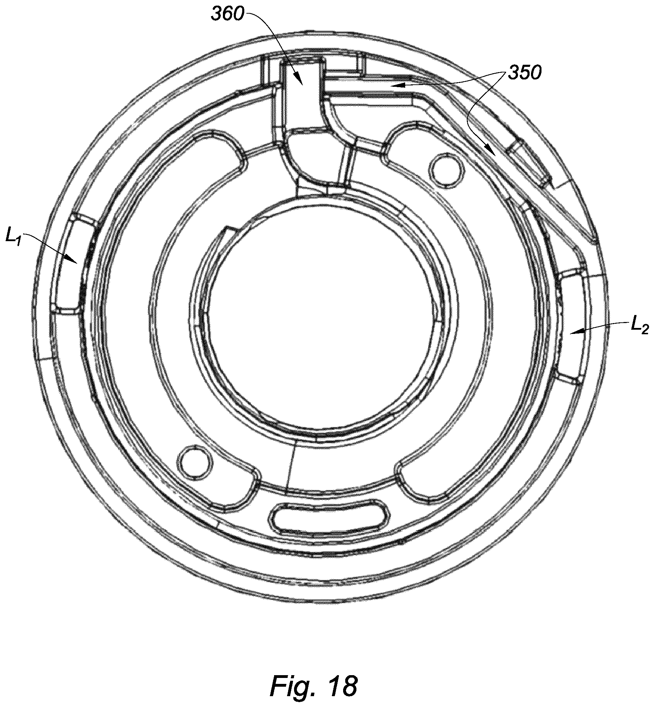

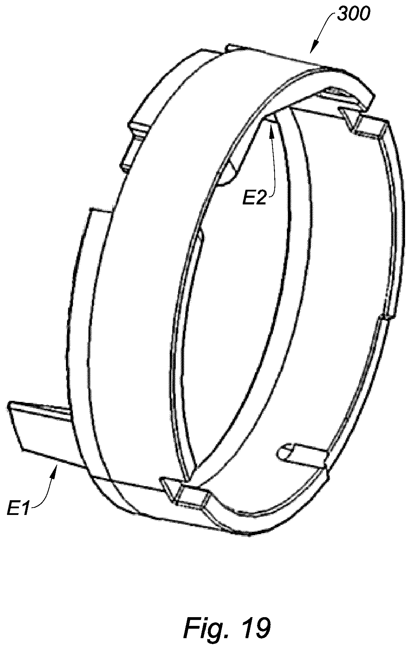

Sur la figure 18, on a représenté, selon une vue de face, la couronne 30 et sur la figure 19, la contre-couronne 300 selon une vue en perspective arrière. Ici , la couronne 30 comprend deux lumières L1, L2 destinées à recevoir un ergot correspondant E1, E2 de la contre-couronne 300. Une fois la contre-couronne 300 installée dans la couronne 30, aucune mouvement possible entre elles n'est possible. La fixation peut par exemple s'effectuer par ultrason lorsque, notamment, la couronne 30 et la contre-couronne 300 sont réalisées en un matériau plastique. Bien entendu, on peut prévoir d'autres modes de fixation (encliquetage, collage,...). Sur la figure 18, on note également la présence d'un logement 350 destiné à recevoir l'extrémité 51 de l'embrayage unidirectionnel ainsi qu'un autre logement 360 destiné, quant à lui, à recevoir le ressort 4 de torsion. De manière générale, la contre-couronne 300 présente une formé complémentaire à la couronne 30.

Il convient de noter que l'embrayage unidirectionnel 5 peut être conçu de différentes façons.

Généralement, l'embrayage unidirectionnel 5 se présente sous la forme d'un ressort hélicoïdal, de préférence à spires jointives.

Ce ressort hélicoïdal peut se présenter par ailleurs et classiquement, sous la forme d'un cylindre. En effet, classiquement, et mis à part l'extrémité 51, toutes les spires présentent un même diamètre. C'est ce que l'on peut voir par exemple, avant montage complet de la poulie conforme à l'invention (i.e. avant que le ressort d'embrayage ne soit contraint par les autres composants de la poulie), sur les figures 3, 10, 12, 14 ou 16.

Cependant, d'autres formes peuvent être envisagées, formes qui procurent certains avantages par rapport à la forme cylindrique de ce ressort hélicoïdal.

En effet, l'embrayage unidirectionnel 5 fonctionne par friction. Il faut donc, lorsque l'on souhaite faire passer du couple par l'embrayage éviter le glissement.

La forme cylindrique convient pour la plupart des cas.

Cependant, pour certaines applications, le couple devant être transmis est plus important et la forme cylindrique du ressort d'embrayage peut alors atteindre sa limite de glissement qui ne permet pas de faire passer du couple.

Le demandeur s'est rendu compte que des formes autres que la forme cylindrique pouvaient permettre de repousser la limite de glissement et ainsi fournir une poulie autorisant un passage de couple plus élevé, et ce sans augmenter le nombre de spires, ce qui est d'intérêt pour maîtriser l'encombrement.

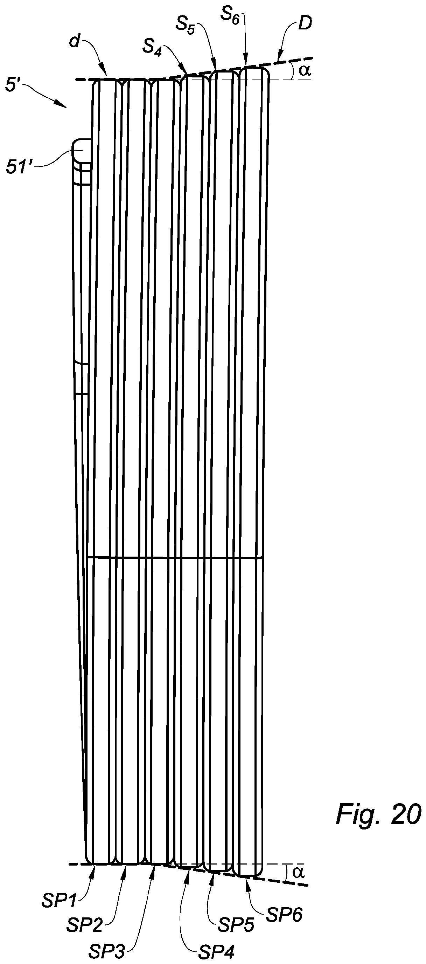

Ainsi, la figure 20 représente un premier exemple d'embrayage unidirectionnel 5' se présentant sous la forme d'un ressort hélicoïdal à spires jointives qui n'est pas cylindrique (extrémité 51' toujours mise à part). En effet, sur cet exemple, les spires SP1, SP2 et SP3 présentent un même diamètre. En revanche, la spire SP4 présentent un diamètre plus grand que les spires SP1 à SP3, la spire SP5 présente un diamètre plus grand que la spire SP4 et la spire SP6 présente un diamètre plus grand que la spire SP5. Avantageusement, et comme représenté sur la figure 20, l'évolution des diamètres des spires SP4, SP5 et SP6 se fait de manière constante. Autrement dit, on peut définir une droite D passant par un sommet S4, S5, S6 de chaque spire SP4, SP5, SP6. On peut aussi définir cette configuration par un angle α entre la droite D et la droite d passant par les sommets des spires SP1, SP2 et SP3 (la droite d est parallèle à l'axe longitudinal de l'embrayage unidirectionnel 5'). L'angle α peut notamment être compris entre 5° et 10°, et par exemple de 7,5°.

De manière générale, la forme de ce ressort d'embrayage (voir les lignes en pointillés) est définie par une première partie, cylindrique (en l'occurrence formée par les spires SP1 à SP3), dans le prolongement de l'extrémité 51' destinée à être fixée à la couronne, et une deuxième partie, tronconique (en l'occurrence formée par les spires SP4 à SP6), dans le prolongement de la première partie.

Avec cette conception, il est alors possible de monter le ressort d'embrayage 5' avec un serrage classique pour les spires SP1 à SP3 et de prévoir un serrage plus important pour les spires SP4 à SP6 et même, le cas échéant, un serrage d'autant plus important que le diamètre de la spire concerné est important. En augmentant ainsi le serrage sur les spires SP4 à SP6, on repousse la limite de glissement et on peut donc faire passer un couple plus important. Par ailleurs, cette conception ne pose pas de difficultés particulières, par rapport à un ressort cylindrique, lorsque a poulie fonctionne en roue libre. En revanche, cette conception rend cependant un peu plus difficile le montage de l'extrémité libre (celle qui est opposée à l'extrémité 51', non visible sur la figure 20) du ressort d'embrayage.

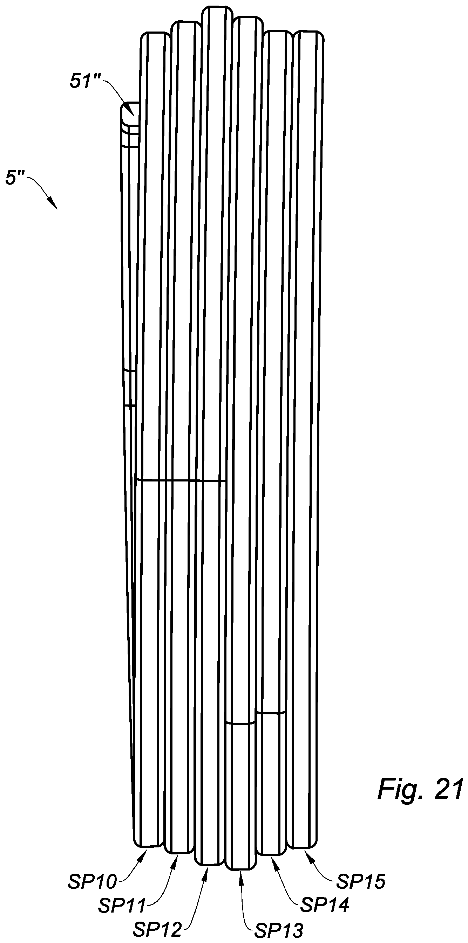

Ainsi également, la figure 21 représente un deuxième exemple d'embrayage unidirectionnel 5" se présentant sous la forme d'un ressort hélicoïdal, en l'occurrence à spires jointives, qui n'est pas cylindrique (extrémité 51" toujours mise à part). En effet, dans cet exemple, la forme générale est celle d'un tonneau. Les spires extrêmes SP10, SP15 présentent donc les plus faibles diamètres et les spires centrales SP12, SP13, les plus grands diamètres. Les spires intermédiaires SP11, SP14 présentent des diamètres supérieures à ceux des spires extrêmes SP10, SP15 mais inférieurs à ceux des spires centrales SP12, SP13.

De manière analogue à la conception de la figure 20, les spires de plus grand diamètre SP12, SP13 peuvent être serrés plus fortement par rapport à un cas où le ressort d'embrayage est cylindrique. Là également, on repousse donc la limite de glissement, ce qui permet de faire passer un couple plus important. Par ailleurs, l'extrémité libre du ressort d'embrayage est alors moins sollicitée que dans la conception de la figure 20, ce qui n'implique aucune conséquence néfaste sur la facilité de montage. Toutefois, la conception de la figure 21 confère à la poulie un couple résiduel, lors du fonctionnement en roue libre qui n'est pas négligeable.

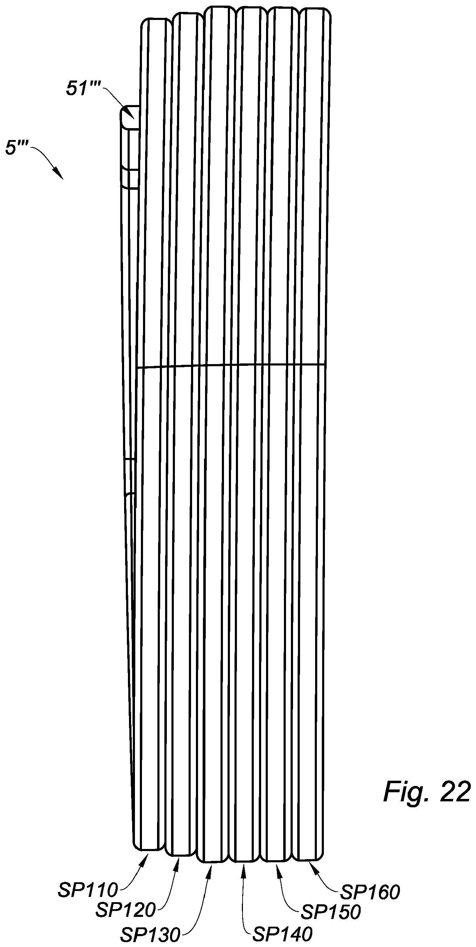

La figure 22 représente un troisième exemple d'embrayage unidirectionnel 5'" se présentant sous la forme d'un ressort hélicoïdal, en l'occurrence à spires jointives, qui n'est pas cylindrique (extrémité 51'" toujours mise à part). Dans cet exemple, la spire SP110 présente un premier diamètre, les spires SP130, SP140, SP150 et SP160 présentent un deuxième et même diamètre et la spire SP120 est un spire intermédiaire dont le diamètre évolue pour passer de la spire SP110 à la spire SP130. Le deuxième diamètre est plus grand que le premier diamètre.

De manière générale, la forme de ce ressort d'embrayage est définie par une première partie, tronconique (en l'occurrence formée par les spires SP110 et SP120), dans le prolongement de l'extrémité 51' destinée à être fixée à la couronne, et une deuxième partie, cylindrique (en l'occurrence formée par les spires SP130 à SP160), dans le prolongement de la première partie.

Par rapport à un ressort cylindrique, la conception de la figure 22 permet de repousser la limite de glissement. Par ailleurs, comme pour une conception cylindrique, elle ne pose pas difficultés de montage et ne présente pas d'inconvénients particuliers lorsque la poulie fonctionne en mode roue libre.

Cette dernière conception est donc particulièrement avantageuse.

Pour donner un exemple, on peut considérer un embrayage unidirectionnel 5, se présentant sous la forme d'un ressort hélicoïdal à spires jointives, de forme cylindrique, destiné à être mis dans une poulie conforme à l'invention dont le diamètre D12 = 58mm. On prévoit alors un serrage uniforme de 1,6mm. Cela signifie incidemment que le diamètre du ressort d'embrayage est, avant montage de 59,6mm. Par ailleurs, l'embrayage unidirectionnel 5 est ici réalisé avec un acier selon la norme EN10270-1 SH. La jante 1 est quant à elle réalisée en acier type AISI 1018 avec comme surface de contact avec l'embrayage unidirectionnel, une nitruration pour obtenir une dureté supérieure à 300HV0.1.

De manière analogue, pour un embrayage unidirectionnel 5'" selon la figure 22, et pour la même poulie de diamètre D12 = 58mm, on prévoit alors, pour la spire SP110, un serrage de 1mm et pour les spires SP130 à SP160, un serrage de 2mm. Ces serrages définissent alors incidemment le serrage de la spire de transition SP120. Par ailleurs, l'embrayage unidirectionnel est ici réalisé avec un acier selon la norme EN10270-1 SH. La jante 1 est quant à elle réalisée en acier type AISI 1018 avec comme surface de contact avec l'embrayage unidirectionnel, une nitruration pour obtenir une dureté supérieure à 300HV0.1.

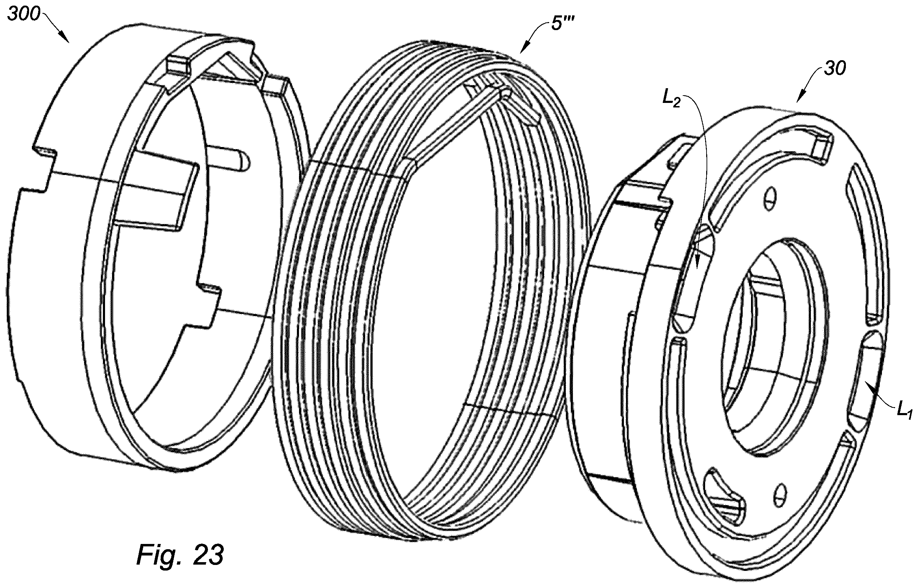

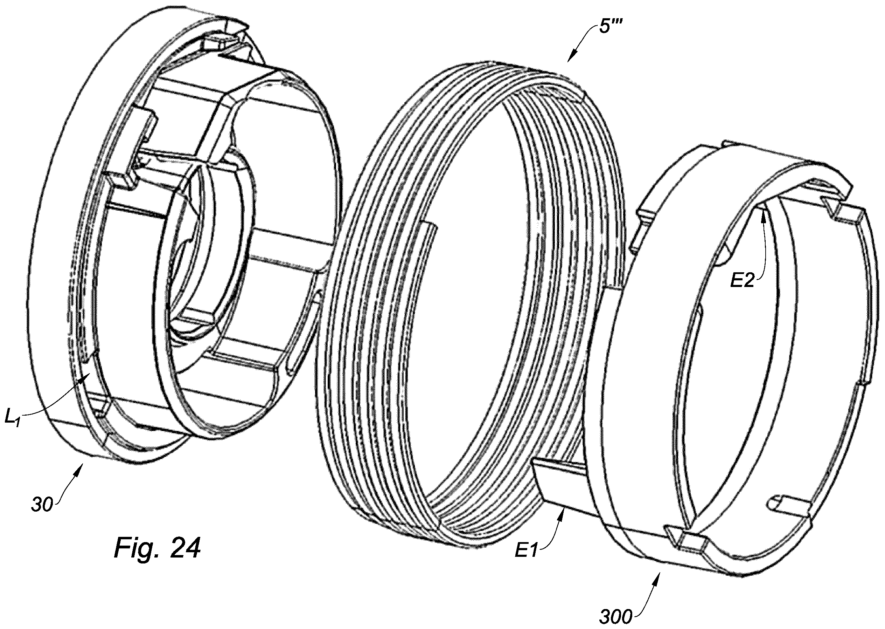

Sur les figures 23 et 24, on a représenté, la couronne 30, la contre-couronne 300 et un embrayage unidirectionnel 5'" conforme à la conception de la figure 22, avant montage.

Quel que soit le mode de réalisation envisagé, une poulie conforme à l'invention apporte plusieurs avantages par rapport à l'art antérieur.

En effet, le fait de décaler axialement l'embrayage unidirectionnel 5, 5', 5", 5'" par rapport à la première zone 11 de la jante 1, grâce à une couronne 3, 30 également décalée axialement et servant de support mécanique à l'embrayage unidirectionnel donne plusieurs libertés dans la conception.

Ceci est d'autant plus vrai lorsque l'embrayage unidirectionnel est intégralement situé sous la deuxième zone 12 de la jante 1 (donc absolument pas, même en partie, sous la première zone 11 de la jante 1) et/ou lorsque la couronne 3, 30, 30' est intégralement située sous la deuxième zone 12 de la jante également (donc absolument pas, même en partie, sous la première zone 11 de la jante 1) et ce que les diamètres D11 et D12 soient égaux ou que le diamètre D12 soit supérieur (strictement) au diamètre D11.

Ainsi, lorsqu'un ressort 4 de torsion est employé dans le cadre de l'invention, cela libère un espace entre le moyeu 2 et la jante 1 qui permet d'insérer un palier 6. On évite ainsi l'emploi d'un ou plusieurs roulements (document D1) dans lequel, par manque de place dans l'espace radial entre le ressort de torsion et l'embrayage sont installés sur les côtés. Cela allège la poulie et réduit généralement son encombrement axial.

Ainsi également, lorsqu'un corps 4" élastiquement déformable est employé dans le cadre de l'invention, on peut mettre en oeuvre un roulement centré sous la première zone 11 de la jante 1 (zone de réception de la courroie) car toute la place est libérée sans pour autant augmenter le rayon de la poulie au niveau de cette zone 11 de la jante et sans pour autant générer un encombrement axial plus important.

De manière générale, la couronne 3, 30 apporte un support mécanique à l'embrayage unidirectionnel 5, 5', 5", 5'" qui ne peut être que bénéfique.

La couronne 3, 30 permet également, par la présence de lumières dans celle-ci, d'autoriser une interaction directe avec des ergots de moyeu pour limiter la déformation du ressort 4 de torsion.

Par ailleurs, la mise en oeuvre d'une couronne apte à se déplacer en rotation par rapport à la jante 1 et/ou, selon le mode de fonctionnement, par rapport au moyeu 2 est particulièrement intéressante. En effet, lorsque cette couronne 3, 30 est au contact du capot 8, on assure un freinage en mode « roue libre » et en mode « roue libre » uniquement, si bien que ce freinage est mis en oeuvre seulement lorsque cela est nécessaire (limiter la bruyance, par exemple rotation de la couronne 3 avec le moyeu 2 lorsque ce dernier est en survitesse par rapport à la jante 1). En mode « couplage », ce frottement n'existe pas ce qui améliore le passage de couple sans user inutilement la couronne 3, 30 ou le capot 8.

De surcroît, dans le cas où la deuxième zone 12 de la jante 1 présente un diamètre interne D₁₂ plus grand que le diamètre interne D₁₁ de la première zone 11 de la jante, on peut mettre en oeuvre un embrayage unidirectionnel 5 dont le diamètre est plus grand que celui qui est proposé dans le document D1. Ceci est particulièrement intéressant car le couple susceptible d'être transmis par l'embrayage unidirectionnel 5, 5', 5", 5" est limité par son diamètre. Dans le cadre de l'invention, on peut donc mettre en oeuvre un embrayage unidirectionnel apte à faire passer des couples plus élevés. Incidemment, pour un couple donné sur l'embrayage unidirectionnel, l'effort tangentiel qui lui est appliqué (frottement avec la jante 1) est alors moindre que dans le document D1.

La durée de vie de l'embrayage unidirectionnel 5, 5', 5", 5'" ne peut alors qu'être améliorée.

## Revendications

1. Poulie (100, 100', 100", 100"', 100"") de découplage munie d'un axe longitudinal (AX), ladite poulie comportant :
- une jante (1) comprenant une première zone (11), destinée à recevoir une courroie reliant la jante à un premier élément de transmission de puissance, et une deuxième zone (12) située dans le prolongement axial, à savoir selon la direction définie par l'axe longitudinal (AX) de la poulie, de la première zone (11) ;
- un moyeu (2, 2', 2") destiné à être solidarisé à un deuxième élément de transmission de puissance ;
l'un des éléments de transmission de puissance étant menant et l'autre étant mené ;
- une couronne (3) montée sous la deuxième zone (12) de la jante (1) et autour du moyeu (2, 2', 2"), de sorte que ladite couronne (3) puisse tourner, autour dudit axe longitudinal, par rapport à la jante (1) et/ou le moyeu (2, 2', 2") ;
- un élément (4, 4', 4") élastiquement déformable monté entre le moyeu (2, 2', 2") et la couronne (3) ;
- un embrayage unidirectionnel (5) dont une extrémité (51) est fixée à la couronne (3) et dont la partie restante (52) est montée à la fois sous la deuxième zone (12) de la jante (1) et au-dessus de la couronne (3) si bien qu'en mode couplage, l'embrayage unidirectionnel (5) vient exercer un effort radial contre un alésage interne de la jante (1) ;
la poulie étant **caractérisée en ce que** :
- la première zone (11) de la jante (1) présente un diamètre interne (D₁₁) ;
- la deuxième zone (12) de la jante (1) présente un diamètre interne (D₁₂),
le diamètre interne (D₁₂) de la deuxième zone (12) étant plus grand que le diamètre interne (D₁₁) de la première zone (11).

2. Poulie (100, 100', 100", 100'", 100"") selon la revendication 1, dans laquelle il est prévu un capot (8) monté fixement sur la jante (1) et au contact de la couronne (3).

3. Poulie (100, 100', 100"', 100"") selon l'une des revendications précédentes, dans laquelle l'élément élastiquement déformable est un ressort de torsion (4, 4') centré sur le moyeu (2).

4. Poulie (100, 100', 100"', 100"") selon la revendication précédente, dans laquelle l'extrémité (51) de l'embrayage unidirectionnel (5) est agencée au contact d'une extrémité (41, 41') du ressort (4, 4') de torsion.

5. Poulie (100, 100', 100"', 100"") selon la revendication précédente, dans laquelle :
- l'extrémité (41) du ressort (4) de torsion qui est au contact de l'embrayage unidirectionnel (5) est recourbée, par rapport au reste, définissant une forme générale cylindrique, dudit ressort (4) de torsion ; et
- l'extrémité (51) de l'embrayage unidirectionnel (5) est au contact d'une face latérale (410) de cette extrémité recourbée (41) du ressort (4) de torsion.

6. Poulie (100'") selon la revendication 4, dans laquelle :
- l'extrémité (41') du ressort (4) de torsion qui est au contact de l'embrayage unidirectionnel (5) est non recourbée par rapport au reste, définissant une forme générale cylindrique, dudit ressort (4) de torsion ; et
- l'extrémité (51) de l'embrayage unidirectionnel (5) est mise bout à bout avec cette extrémité non recourbée (41') du ressort (4') de torsion.

7. Poulie (100, 100"') selon l'une des revendications 4 à 6, dans laquelle :
- le moyeu (2) comprend au moins un ergot (21, 22, 23) ; et
- la couronne (3) comprend au moins une lumière (31, 32, 33) recevant ledit au moins un ergot (21, 22, 23) de moyeu (2) ;
de sorte que, dans un sens de rotation relatif entre la jante (1) et le moyeu (2), le ressort de torsion (4, 4") s'engage sur le moyeu (2) jusqu'à ce que ledit au moins un ergot (21, 22, 23) de moyeu (2) vienne en butée contre une extrémité (311, 321, 331) de ladite au moins une lumière (31, 32, 33) de couronne (3).

8. Poulie (100, 100', 100") selon l'une des revendications 4 à 7, comportant au moins un palier (6) situé entre la jante (1) et le moyeu (2).

9. Poulie (100, 100', 100") selon la revendication précédente, dans laquelle ledit au moins un palier (6) comporte au moins une face (61) s'étendant radialement et en contact avec le moyeu (2, 2').

10. Poulie (100, 100',100") selon l'une des revendications 8 ou 9, dans lequel ledit au moins un palier (6) est réalisé soit en un matériau plastique choisi parmi le polyétheréthercétone (PEEK), le polytéréphtalate d'éthylène (PET), le polyamide (PA) chargé en bisulfure de molybdène (MoS₂) ou le polyamide (PA) chargé en polytétrafluoroéthylène (PTFE) soit avec une couche interne métallique ou en alliage métallique, recouverte par une couche externe chargée de polytétrafluoroéthylène (PTFE).

11. Poulie (100") selon l'une des revendications 1 ou 2, dans laquelle l'élément élastiquement déformable est un corps (4") réalisé en élastomère ou en thermoplastique élastomère.

12. Poulie (100") selon la revendication précédente, dans laquelle il est prévu au moins un roulement (6") agencé entre le moyeu (2") et la jante (1), avantageusement sous la première zone (11) de la jante (1).

13. Poulie (100, 100', 100"') selon l'une des revendications précédentes, dans laquelle l'extrémité (51) de l'embrayage unidirectionnel (5) est logée dans une fente (35) de la couronne (3), ladite poulie comportant en outre un coin (60) situé dans la fente (35) et à côté de ladite extrémité (51) de l'embrayage unidirectionnel (5).

14. Poulie (100"") selon l'une des revendications 1 à 12, comprenant une contre-couronne (300, 300') coopérant avec la couronne (30 30'), par exemple au moins par l'intermédiaire de lumières (L1, L2) prévues dans la couronne et d'ergots (E1, E2) prévus dans la contre-couronne.

15. Poulie (100, 100', 100", 100'", 100"") selon l'une des revendications précédentes, dans laquelle l'embrayage unidirectionnel (5) est un ressort hélicoïdal, par exemple à spires jointives.

16. Poulie (100, 100', 100", 100"', 100"") selon la revendication précédente dans laquelle le ressort hélicoïdal, par exemple à spires jointives, présente une forme choisie parmi :
- une forme cylindrique ;
- une forme comprenant une première partie, cylindrique, dans le prolongement de son extrémité (51) fixée à la couronne et une deuxième partie, tronconique, dans le prolongement de la première partie;
- une forme en tonneau ; ou
- une forme comprenant une première partie, tronconique, dans le prolongement de son extrémité (51) fixée à la couronne et une deuxième partie, cylindrique, dans le prolongement de la première partie.

## Patentansprüche

1. Entkoppelungsriemenscheibe (100, 100', 100", 100"', 100""), die mit einer Längsachse (AX) versehen ist, wobei die Riemenscheibe enthält:
- eine Felge (1), umfassend einen ersten Bereich (11), der dazu bestimmt ist, einen Riemen aufzunehmen, der die Felge mit einem ersten Leistungsübertragungselement verbindet, und einen zweiten Bereich (12), der sich in der axialen Verlängerung des ersten Bereichs (11) befindet, und zwar gemäß der von der Längsachse (AX) der Riemenscheibe definierten Richtung;
- eine Nabe (2, 2', 2"), die dazu bestimmt ist, mit einem zweiten Leistungsübertragungselement fest verbunden zu werden;
wobei eines der Leistungsübertragungselemente antreibt und das andere angetrieben wird;
- einen Ring (3), der unter dem zweiten Bereich (12) der Felge (1) und um die Nabe (2, 2', 2") montiert ist, sodass der Ring (3) in Bezug auf die Felge (1) und/oder die Nabe (2, 2', 2") um die Längsachse drehen kann;
- ein elastisch verformbares Element (4, 4', 4"), das zwischen der Nabe (2, 2', 2") und dem Ring (3) montiert ist;
- eine Einwegkupplung (5), von der ein Ende (51) am Ring (3) fixiert ist und von der der restliche Teil (52) zugleich unterhalb des zweiten Bereichs (12) der Felge (1) und oberhalb des Rings (3) montiert ist, sodass im Koppelungsmodus, die Einwegkupplung (5) eine radiale Kraft auf eine innere Bohrung der Felge (1) ausübt;
wobei die Riemenscheibe **dadurch gekennzeichnet ist, dass**:
- der erste Bereich (11) der Felge (1) einen inneren Durchmesser (D₁₁) aufweist;
- der zweite Bereich (12) der Felge (1) einen inneren Durchmesser (D₁₂) aufweist,
wobei der innere Durchmesser (D₁₂) des zweiten Bereichs (12) größer als der innere Durchmesser (D₁₁) des ersten Bereichs (11) ist.

2. Riemenscheibe (100, 100', 100", 100"', 100"") nach Anspruch 1, wobei eine Haube (8) vorgesehen ist, die fest auf der Felge (1) montiert ist und mit dem Ring (3) in Kontakt steht.

3. Riemenscheibe (100, 100', 100'", 100"") nach einem der vorstehenden Ansprüche, wobei das elastisch verformbare Element eine Torsionsfeder (4, 4') ist, die auf der Nabe (2) zentriert ist.

4. Riemenscheibe (100, 100', 100'", 100"") nach dem vorstehenden Anspruch, wobei das Ende (51) der Einwegkupplung (5) in Kontakt mit einem Ende (41, 41') der Torsionsfeder (4, 4') angeordnet ist.

5. Riemenscheibe (100, 100', 100'", 100"") nach dem vorstehenden Anspruch, wobei:
- das Ende (41) der Torsionsfeder (4), das in Kontakt mit der Einwegkupplung (5) steht, in Bezug auf den Rest der Torsionsfeder (4), der eine allgemein zylindrische Form definiert, gekrümmt ist; und
- das Ende (51) der Einwegkupplung (5) in Kontakt mit einer Seitenfläche (410) dieses gekrümmten Endes (41) der Torsionsfeder (4) steht.

6. Riemenscheibe (100'") nach Anspruch 4, wobei:
- das Ende (41') der Torsionsfeder (4), das in Kontakt mit der Einwegkupplung (5) steht, in Bezug auf den Rest der Torsionsfeder (4), der eine allgemein zylindrische Form definiert, nicht gekrümmt ist; und
- das Ende (51) der Einwegkupplung (5) mit diesem nicht gekrümmten Ende (41') der Torsionsfeder (4') aneinanderstößt.

7. Riemenscheibe (100, 100'") nach einem der Ansprüche 4 bis 6, wobei:
- die Nabe (2) mindestens einen Stift (21, 22, 23) umfasst; und
- der Ring (3) mindestens eine Öffnung (31, 32, 33) umfasst, die den mindestens einen Stift (21, 22, 23) der Nabe (2) aufnimmt;
sodass in einer relativen Drehrichtung zwischen der Felge (1) und der Nabe (2) die Torsionsfeder (4, 4") in die Nabe (2) eingreift, bis der mindestens eine Stift (21, 22, 23) der Nabe (2) an ein Ende (311, 321, 331) der mindestens einen Öffnung (31, 32, 33) des Rings (3) stößt.

8. Riemenscheibe (100, 100', 100") nach einem der Ansprüche 4 bis 7, die mindestens ein Lager (6) enthält, das sich zwischen der Felge (1) und der Nabe (2) befindet.

9. Riemenscheibe (100, 100', 100") nach dem vorstehenden Anspruch, wobei das mindestens eine Lager (6) mindestens eine Fläche (61) enthält, die sich radial erstreckt und mit der Nabe (2, 2') in Kontakt steht.

10. Riemenscheibe (100, 100', 100") nach einem der Ansprüche 8 oder 9, wobei das mindestens eine Lager (6) entweder aus einem Kunststoff, der ausgewählt ist aus Polyetheretherketon (PEEK), Polyethylenterephthalat (PET), Polyamid (PA), das mit Molybdändisulfid (MoS₂) beladen ist, oder Polyamid (PA), das mit Polytetrafluorethylen (PTFE) beladen ist, oder mit einer inneren Metallschicht oder einer Metalllegierung, die durch eine äußere Schicht, die mit Polytetrafluorethylen (PTFE) beladen ist, bedeckt ist, hergestellt ist.

11. Riemenscheibe (100") nach einem der Ansprüche 1 oder 2, wobei das elastisch verformbare Element ein Körper (4") ist, der aus Elastomer oder aus thermoplastischem Elastomer hergestellt ist.

12. Riemenscheibe (100") nach dem vorstehenden Anspruch, wobei mindestens ein Radlager (6") vorgesehen ist, das zwischen der Nabe (2") und der Felge (1) angeordnet ist, vorzugsweise unterhalb des ersten Bereichs (11) der Felge (1).

13. Riemenscheibe (100, 100', 100'") nach einem der vorstehenden Ansprüche, wobei das Ende (51) der Einwegkupplung (5) in einem Spalt (35) des Rings (3) untergebracht ist, wobei die Riemenscheibe weiter eine Ecke (60) enthält, die sich im Spalt (35) und neben dem Ende (51) der Einwegkupplung (5) befindet.

14. Riemenscheibe (100"") nach einem der Ansprüche 1 bis 12, umfassend einen Gegenring (300, 300'), der zum Beispiel mindestens über Öffnungen (L1, L2), die im Ring vorgesehen sind, und Stifte (E1, E2), die im Gegenring vorgesehen sind, mit dem Ring (30, 30') zusammenwirkt.

15. Riemenscheibe (100, 100', 100", 100"', 100"") nach einem der vorstehenden Ansprüche, wobei die Einwegkupplung (5) eine schraubenförmige Feder ist, zum Beispiel mit aneinanderliegenden Windungen.

16. Riemenscheibe (100, 100', 100", 100'", 100"") nach dem vorstehenden Anspruch, wobei die schraubenförmige Feder, zum Beispiel mit aneinanderliegenden Windungen, eine Form aufweist, die ausgewählt ist aus:
- einer zylindrischen Form;
- einer Form, die einen ersten zylindrischen Teil in der Verlängerung ihres Endes (51), das am Ring befestigt ist, und einen zweiten kegelstumpfförmigen Teil in der Verlängerung des ersten Teils umfasst;
- einer Tonnenform; oder
- einer Form, die einen ersten kegelstumpfförmigen Teil in der Verlängerung ihres Endes (51), das am Ring befestigt ist, und einen zweiten zylindrischen Teil in der Verlängerung des ersten Teils umfasst.

## Claims

1. Uncoupling pulley (100, 100', 100", 100"', 100"") having a longitudinal axis (AX), said pulley comprising:
- a rim (1) comprising a first zone (11), intended to receive a belt connecting the rim to a first power transmission element, and a second zone (12) located in the axial extension, namely according to the direction defined by the longitudinal axis (AX) of the pulley, of the first zone (11);
- a hub (2, 2', 2") intended to be secured to a second power transmission element;
one of the power transmission elements driving and the other being driven;
- a ring (3) mounted under the second zone (12) of the rim (1) and around the hub (2, 2', 2"), in such a way that said ring (3) can rotate, about said longitudinal axis, with respect to the rim (1) and/or the hub (2, 2', 2");
- an elastically deformable element (4, 4', 4") mounted between the hub (2, 2', 2") and the ring (3);
- a one-way clutch (5) of which one end (51) is fixed to the ring (3) and of which the remaining portion (52) is mounted both under the second zone (12) of the rim (1) and above the ring (3) in such a way that in coupling mode, the one-way clutch (5) exerts a radial force against an internal bore of the rim (1);
the pulley being **characterised in that**:
- the first zone (11) of the rim (1) has an inner diameter (D₁₁);
- the second zone (12) of the rim (1) has an inner diameter (D₁₂),
the inner diameter (D₁₂) of the second zone (12) being greater than the inner diameter (D₁₁) of the first zone (11).

2. Pulley (100, 100', 100", 100"', 100"") according to claim 1, wherein a cover (8) is provided solidly mounted on the rim (1) and in contact with the ring (3).

3. Pulley (100, 100', 100"', 100"") according to one of the preceding claims, wherein the elastically deformable element is a torsion spring (4, 4') centred on the hub (2).

4. Pulley (100, 100', 100'", 100"") according to the preceding claim, wherein the end (51) of the one-way clutch (5) is arranged in contact with an end (41, 41') of the torsion spring (4, 4').

5. Pulley (100, 100', 100'", 100"") according to the preceding claim, wherein:
- the end (41) of the torsion spring (4) which is in contact with the one-way clutch (5) is curved, with respect to the rest, defining a general cylindrical shape, of said torsion spring (4); and
- the end (51) of the one-way clutch (5) is in contact with a lateral face (410) of this curved end (41) of the torsion spring (4).

6. Pulley (100'") according to claim 4, wherein:
- the end (41') of the torsion spring (4) which is in contact with the one-way clutch (5) is not curved with respect to the rest, defining a generally cylindrical shape, of said torsion spring (4); and
- the end (51) of the one-way clutch (5) is placed end-to-end with this non-curved end (41') of the torsion spring (4').

7. Pulley (100, 100'") according to one of claims 4 to 6, wherein:
- the hub (2) comprises at least one lug (21, 22, 23); and
- the ring (3) comprises at least one aperture (31, 32, 33) receiving said at least one hub (2) lug (21, 22, 23);
in such a way that, in a relative direction of rotation between the rim (1) and the hub (2), the torsion spring (4, 4") is engaged on the hub (2) until said at least one hub (2) lug (21, 22, 23) abuts against an end (311, 321, 331) of said at least one aperture (31, 32, 33) of ring (3).

8. Pulley (100, 100', 100") according to one of claims 4 to 7, comprising at least one bearing (6) located between the rim (1) and the hub (2).

9. Pulley (100, 100', 100") according to the preceding claim, wherein said at least one bearing (6) comprises at least one face (61) extending radially and in contact with the hub (2, 2').

10. Pulley (100, 100', 100") according to one of claims 8 or 9, wherein said at least one bearing (6) is made either from a plastic material chosen from polyetheretherketone (PEEK), polyterephthalate ethylene (PET), polyamide (PA) loaded with molybdenum disulphide (MoS₂) or the polyamide (PA) loaded with polytetrafluoroethylene (PTFE) or with a metal or metal alloy inner layer, coated with an outer layer loaded with polytetrafluoroethylene (PTFE).

11. Pulley (100") according to one of claims 1 or 2, wherein the elastically deformable element is a body (4") made from elastomer or elastomer thermoplastic.

12. Pulley (100") according to the preceding claim, wherein at least one bearing (6") is provided arranged between the hub (2") and the rim (1), advantageously under the first zone (11) of the rim (1).

13. Pulley (100, 100', 100'") according to one of the preceding claims, wherein the end (51) of the one-way clutch (5) is housed in a slot (35) of the ring (3), said pulley further comprising a corner (60) located in the slot (35) and next to said end (51) of the one-way clutch (5).

14. Pulley (100"") according to one of claims 1 to 12, comprising a counter-ring (300, 300') that cooperates with the ring (30 30'), for example at least by the intermediary of apertures (L1, L2) provided in the ring and lugs (E1, E2) provided in the counter-ring.

15. Pulley (100, 100', 100", 100'", 100"") according to one of the preceding claims, wherein the one-way clutch (5) is a coil spring, for example with contiguous turns.

16. Pulley (100, 100', 100", 100'", 100"") according to the preceding claim wherein the coil spring, for example with contiguous turns, has a shape chosen from among:
- a cylindrical shape;
- a shape comprising a first portion, cylindrical, in the extension of its end (51) fixed to the ring and a second portion, tapered, in the extension of the first portion;
- a barrel shape; or
- a shape comprising a first tapered portion, in the extension of its end (51) fixed to the ring, and a second cylindrical portion, in the extension of the first portion.
